# EUROPÄISCHE PATENTSCHRIFT

(11) **EP 1 875 109 B1**
(45) Veröffentlichungstag und Bekanntmachung des Hinweises auf die Patenterteilung: **27.10.2010**
(21) Anmeldenummer: 06776027.2
(22) Anmeldetag: 27.04.2006
(51) Int. Cl.: F16H 63/30, B60K 23/08

(54) **VERTEILERGETRIEBE FÜR KRAFTFAHRZEUGE MIT EINER GESTEUERTEN REIBUNGSKUPPLUNG**
POWER DIVIDER FOR MOTOR VEHICLES COMPRISING A CONTROLLED FRICTION COUPLING
BOITE DE TRANSFERT DESTINEE A DES VEHICULES COMPORTANT UN EMBRAYAGE PAR FRICTION COMMANDE

(30) Priorität: 28.04.2005 AT 27805 U
(43) Veröffentlichungstag der Anmeldung: 09.01.2008
(73) Patentinhaber: Magna Powertrain AG & Co. KG, 8502 Lannach (AT)
(72) Erfinder: WOLFSJÄGER, Erich, A-4432 Ernsthofen (AT); GALL, Dietmar, A-1140 Wien (AT); FRIEDL, Markus, A-8350 Fehring (AT); KROGGER, Markus, A-8253 Waldbach (AT)
(74) Vertreter: Fries, Oliver
(86) Internationale Anmeldenummer: PCT/EP2006/003936
(87) Internationale Veröffentlichungsnummer: WO 2006/128533

(56) Entgegenhaltungen:
- WO-A-01/59331
- WO-A-03/054426
- US-A1- 2003 029 690

## Beschreibung

Die Erfindung betrifft ein Verteilergetriebe für Kraftfahrzeuge bestehend aus einem Gehäuse, einer Primärwelle mit Antriebsverbindung zu einer ersten angetriebenen Achse, einer gesteuerten Reibungskupplung und einem Versatztrieb für den Antrieb einer zweiten angetriebenen Achse, welcher Versatztrieb aus einem von der Reibungskupplung steuerbar angetriebenen ersten Zahnrad, und einem mit diesem kämmenden zweiten Zahnrad und einem mit dem zweiten Zahnrad kämmenden dritten Zahnrad besteht, wobei die Reibungskupplung mittels zweier gegeneinander verdrehbarer Rampenringe betätigbar ist und jeder Rampenring einen Scherenhebel hat, der mit seinem äusseren Ende auf einer Steuerkurve reitet.

Verteilergetriebe finden in verschiedenen Konstellationen Verwendung. Sie können mit oder ohne Zentraldifferential, mit Differentialsperre oder zuschaltbarem Antrieb der zweiten angetriebenen Achse, mit oder ohne Untersetzungsstufe sein. In der Regel sind sie in Längsrichtung eingebaut. Der Einsatz einer Reibungskupplung erlaubt zusätzlich zu weichem Einkuppeln auch die kontinuierliche Steuerung des von ihr übertragenen Momentes. Diese soll möglichst genau und möglichst schnell arbeiten.

Aus der WO 01/59331 A1 ist ein gattungsgemäßes Verteilergetriebe bekannt, dessen Versatztrieb eine Zahnkette enthält und dessen Scherenhebel mit einer trommelförmigen Kulisse zusammenwirken, die um eine quer zur Primärwelle angeordnete Achse drehbar ist. Das ist zunächst kinematisch ungünstig, nicht zuletzt weil die Enden der Scherenhebel auf der trommelförmigen Kulisse Kreisbahnen beschreiben. Weiters bedingt die trommelförmige Kulisse eine den Raumbedarf des Verteilergetriebes ungünstig beeinflussende Lage des Steuerantriebes, was vor allem bei einem kurz bauenden Verteilergetriebe ohne Differential und/oder Geländegangstufe ins Gewicht fällt. Schließlich verbieten die Scherenhebel die Ausführung des Versatztriebes als Rädertrieb, da sie mit der Welle eines Zwischenzahnrades kollidieren würden. Ein Rädertrieb besteht aus einer Anzahl (meist drei, es können aber auch zwei oder vier sein) miteinander kämmender Zahnräder und hat gegenüber einem Kettentrieb gewisse Vorteile.

Es ist somit Aufgabe der Erfindung, ein Verteilergetriebe zu schaffen, das durch besondere Anordnung der die Scherenhebel betätigenden Bauteile günstige Einbaumaße hat und dessen Versatztrieb mit Zahnrädern ausführbar ist.

Erfindungsgemäß wird die Aufgabe der Erfindung durch die Merkmale des Anspruchs 1 erreicht. Der Steuernocken mit seinen zwei Kulissen und der parallelen Ausrichtung seiner Drehachse ist kinematisch optimal und bringt die günstigen Einbaumaße des Verteilergetriebes mit seinem Steuerantrieb. Die Lagerung des Steuernocken auf dem Zwischenzahnrad löst das Kollisionsproblem, minimiert den Raumbedarf der Steuerelemente und verleiht dem Steuernocken eine präzise Lagerung auf einem großen Durchmesser. Wenn weiters die Steuerkulissen in einer Ebene liegen, wird die Raumökonomie noch besser und der Steuernocken wird ein besonders einfacher Bauteil. Dadurch dass die Kulissen in radialer Richtung ansteigen, steht der gesamte Umfang des Steuernocken für die beiden Kulissen zur Verfügung. Bei großer radialer Erstreckung der Kulisse - die sich aus der Lagerung auf dem Zwischenzahnrad sowieso ergibt - steht für die Kulisse selbst ein großer Weg zur Verfügung, der eine feinfühlige Steuerung der Kupplung erlaubt.

Der Forderung nach Eigensicherheit ist weitgehend Rechnung getragen, wenn die Steuerkulissen in einem Drehsinn ansteigen, der dem Drehsinn des zweiten Zahnrades entgegengesetzt ist. Mit anderen Worten, die Öffnungsdrehrichtung der Steuerkulisse ist gleich dem Drehsinn des zweiten Zahnrades, oder die Zustelldrehrichtung ist ihm entgegengesetzt. So wird der Steuernocken im Sinne eines Öffnens der Kupplung mitgenommen, wenn beispielsweise das Lager zwischen dem Steuernocken und dem zweiten Zahnrad defekt wird und sich festfrisst. Damit wird einer für die Fahrsicherheit kritischen starren Koppelung des Antriebes der zweiten angetriebenen Achse vorgebeugt.

Ein sehr einfacher Antrieb des Steuernockens wird in Weiterbildung der Erfindung dadurch erreicht, dass er mit einem vierten Zahnrad drehfest verbunden oder einstückig ist, das mit einem Ausgangszahnrad eines elektrischen Getriebemotors kämmt.

Im folgenden wird die Erfindung anhand von Abbildungen beschrieben und erläutert. Es stellen dar:
- Fig. 1: Einen Schnitt durch ein erfindungsgemäßes Verteilergetriebe,
- Fig. 2: eine axonometrische Teilansicht von schräg vorne,
- Fig. 3: eine axonometrische Teilansicht von schräg hinten.

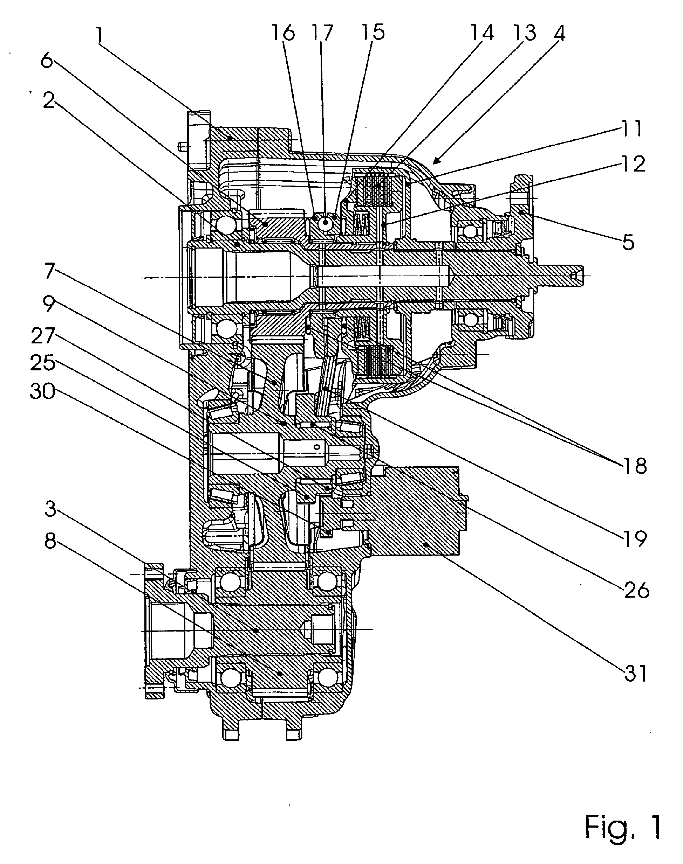

In Fig. 1 ist das Gehäuse eines Verteilergetriebes summarisch mit 1 bezeichnet. Es enthält eine Primärwelle 2, eine Sekundärwelle 3, eine Reibungskupplung 4 mit ihrem Aktuator sowie einen Versatztrieb. Die Primärwelle 2 ist auf der linken Bildseite mit einer Antriebsquelle, etwa dem nicht dargestellten Schaltgetriebe eines Kraftfahrzeuges, verbunden und auf der im Bild rechten Seite über einen Flansch 5 mit einer nicht dargestellten ersten angetriebenen Achse. Auf der Primärwelle 2 befindet sich die Kupplung 4 und ein erstes Zahnrad 6 des Versatztriebes. Dieses kämmt mit einem auf einer Zwischenwelle 9 angeordneten zweiten Zahnrad 7, welches seinerseits wieder mit einem dritten Zahnrad 8 kämmt, das drehfest mit einer Sekundärwelle 3 verbunden ist, von welcher aus die zweite Achse des Kraftfahrzeuges angetrieben ist. Die Wellen 2, 3 und 9 sind in geläufiger Weise im Gehäuse 1 gelagert und abgedichtet. Ihre Anzahl und Anordnung ist hier nur als Beispiel zu verstehen.

Die Kupplung 4 ist eine Lamellenkupplung, deren Außenteil 11 mit der Primärwelle 2 und deren Innenteil 12 mit dem ersten Zahnrad 6 drehfest verbunden ist. Zwischen den beiden Kupplungsteilen 11, 12 ist ein Lamellenpaket 13, dessen Lamellen abwechselnd mit dem einen (11) oder anderen (12) Kupplungsteil drehfest verbunden sind. An das Lamellenpaket 13 schließt eine Andruckplatte 14 an, die von einer Rampenringeinheit beaufschlagbar ist.

Die Rampenringeinheit besteht aus einem ersten Rampenring 15, auf der Seite der Andruckplatte 14, einem zweiten Rampenring 16, auf der Seite des ersten Zahnrades 6 und dazwischen über den Umfang verteilten Kugeln 17. Da die Rampenringe nur zur Betätigung der Kupplung verdreht werden, aber auf rotierenden Teilen sitzen, sind Lager, insbesondere auch achsiale Kräfte aufnehmende Nadellager 18 vorgesehen. In dem gezeigten Ausführungsbeispiel wirken die Kugeln mit im einzelnen nicht dargestellten in Umfangsrichtung ansteigenden Rinnen zusammen. Es sind aber auch andere Bauarten möglich. Wesentlich ist, dass das Verdrehen der beiden Rampenringe 15, 16 im Gegensinn diese in achsialer Richtung auseinandertreibt.

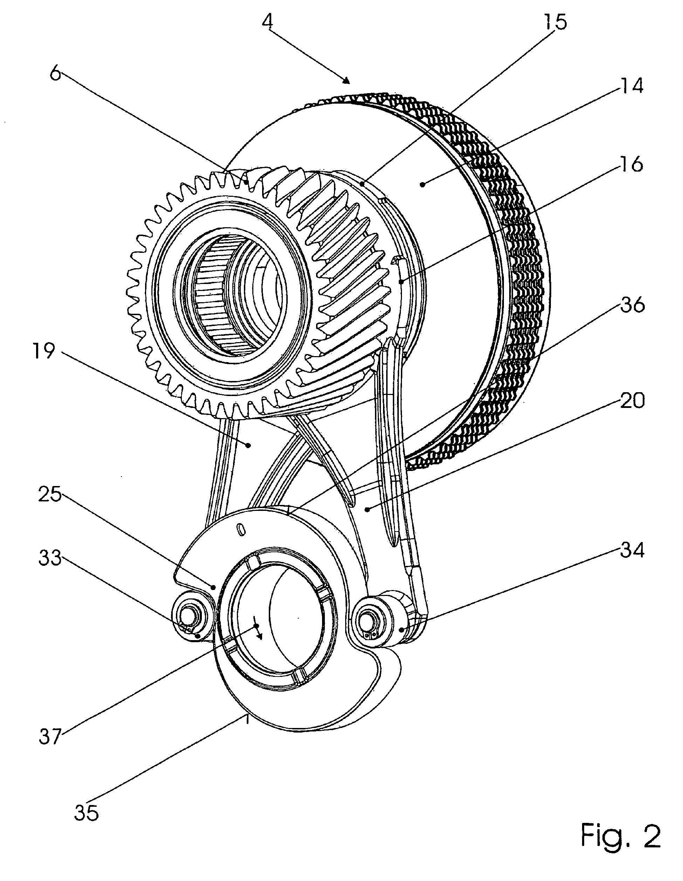

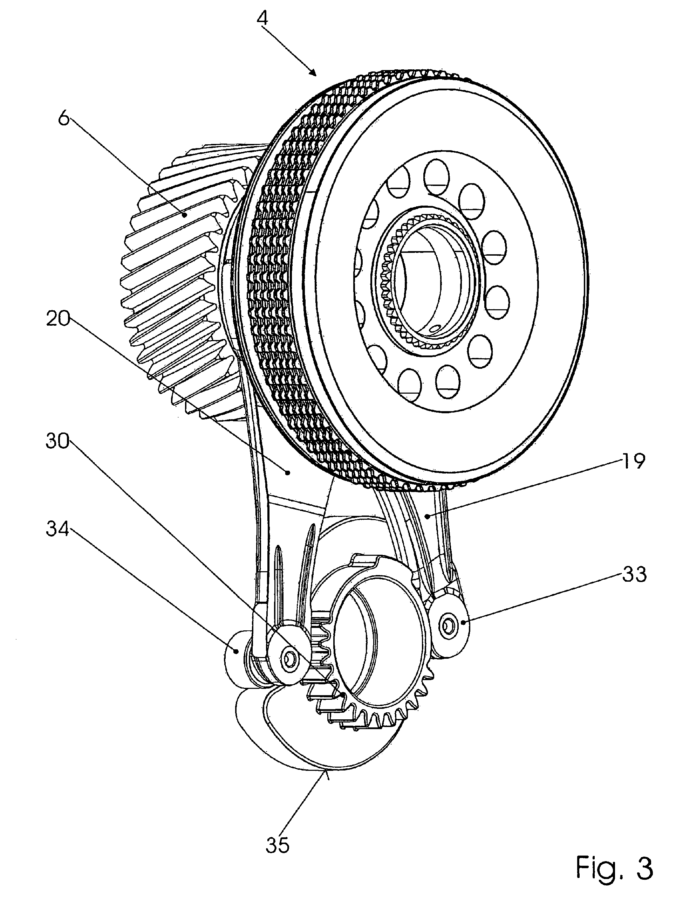

An den Rampenringen 15, 16 ist jeweils ein Scherenhebel 19, 20 angebracht, beziehungsweise mit diesem einstückig, der zweite Scherenhebel 20 ist in Fig. 2 und Fig. 3 zu sehen. Die Enden der Scherenhebel 19, 20 reiten auf einem Steuernocken 25, welcher mittels Nadellagern 26 auf der Zwischenwelle 9 des zweiten Zahnrades 7 gelagert ist. Da das zweite Zahnrad 7 mit der Zwischenwelle 9 einstückig ist, ist der Steuernocken 25 eigentlich auf dem zweiten Zahnrad 7 gelagert. Ein viertes Zahnrad 27 ist mit dem Steuernocken 25 fest verbunden oder einstückig und kämmt mit dem Abtriebszahnrad 30 eines nur angedeuteten elektrischen Getriebemotors 31.

In Fig. 2 und 3 ist unter Weglassung des Gehäuses und des Versatztriebes die Aktuatorik der Kupplung 4 in zwei verschiedenen Blickrichtungen dargestellt. Von den beiden Rampenringen 15, 16 gehen die Scherenhebel 19, 20 aus. Diese haben an ihren Enden Rollen 33, 34, welche auf den Steuernocken 25 reiten. Der Steuernocken ist eine dicke Platte, dessen Kontur von zwei zentrisch symmetrischen und um einen Halbkreis gegeneinander versetzte Steuerkulissen 35, 36 gebildet ist, auf denen bei Verdrehung des Steuernockens 25 die Rollen 33, 34 abrollen und dabei die Scherenhebel 19, 20 gegensinnig verschwenken. Dadurch drehen sich die Rampenringe 15, 16 ebenfalls gegensinnig und rücken dabei die Lamellenkupplung 4 in einem bestimmten Ausmaß ein. In der gezeigten Stellung der Scherenhebel 19, 20 ist die Kupplung ausgerückt. Wird der Steuernocken 25 in Fig. 2 im Uhrzeigersinn verdreht, wird die Kupplung eingerückt. Ein Richtungspfeil 37 deutet den Drehsinn der Zwischenwelle 9 an, auf der der Steuernocken 25 gelagert ist. Wenn das Nadellager 26 defekt ist oder sich gar festfrisst, so wird der Steuernocken 25 gegen den Uhrzeigersinn mitgenommen und bringt so die Kupplung in die in Fig. 2 dargestellte Stellung, in der sie kein Drehmoment übertragt. So gelangt sie bei einem Defekt von selbst in den sichersten Zustand.

## Patentansprüche

1. Verteilergetriebe für Kraftfahrzeuge bestehend aus einem Gehäuse (1), einer Primärwelle (2) mit Antriebsverbindung zu einer ersten angetriebenen Achse, einer gesteuerten Reibungskupplung (4) und einem Versatztrieb für den Antrieb einer zweiten angetriebenen Achse, welcher Versatztrieb ein von der Reibungskupplung (4) steuerbar angetriebenes erstes Zahnrad (6) und ein drittes Zahnrad (8) aufweist, die miteinander wirkverbunden sind, wobei die Reibungskupplung (4) mittels zweier gegeneinander verdrehbarer Rampenringe (15,16) betätigbar und jeder Rampenring (15,16) einen Scherenhebel (19,20) hat, der mit seinem äusseren Ende auf einer Steuerkurve reitet, **dadurch gekennzeichnet, dass** das Verteilergetriebe ein zweites Zahnrad (7) zwischen dem ersten Zahnrad (6) und dem dritten Zahnrad (8) aufweist, und die Steuerkurven auf einem Steuernocken (25) ausgebildet sind, der zwei gegeneinander versetzte Steuerkulissen (35,36) hat und um eine zur Achse der Primärwelle (2) parallele Achse verdrehbar ist, wobei der Steuernocken (25) auf dem zweiten Zahnrad (7) oder auf dessen Welle (9) drehbar gelagert ist.

2. Verteilergetriebe nach Anspruch 1, **dadurch gekennzeichnet, dass** die Steuerkulissen (35,36) in einer Ebene liegen.

3. Verteilergetriebe nach Anspruch 1, **dadurch gekennzeichnet, dass** die Steuerkulissen (35,36) in einem Drehsinn ansteigen, der dem Drehsinn (37) des zweiten Zahnrades (7) entgegengesetzt ist.

4. Verteilergetriebe nach Anspruch 1, **dadurch gekennzeichnet, dass** der Steuernocken (25) mit einem vierten Zahnrad (27) drehfest verbunden oder einstückig ist, das mit einem Ausgangszahnrad (30) eines elektrischen Getriebemotors (31) kämmt.

## Claims

1. A transfer case for motor vehicles comprising a housing (1), a primary shaft (2) having a drive connection to a first driven axle, a controlled friction clutch (4) and an offset drive for the drive of a second driven axle, said offset drive having a first gear (6) controllably driven by the friction clutch (4), and a third gear (8) which are operationally connected to one another, with the friction clutch (4) being actuable by means of two ramp rings (15, 16) rotatable with respect to one another and each ramp ring (15, 16) having a scissor linkage (19, 20) whose outer end rides on a control curve, **characterized in that** the transfer case has a second gear (7)between the first gear (6) and the third gear (8) and the control curves are formed on a control cam (25) which has two mutually offset control cam tracks (35, 36) and is rotatable around an axis parallel to the axis of the primary shaft (2), with the control cam (25) being rotatably supported on the second gear (7) or on its shaft (9).

2. A transfer case in accordance with claim 1, **characterized in that** the control cam tracks (35, 36) lie in one plane.

3. A transfer case in accordance with claim 1, **characterized in that** the control cam tracks (35, 36) rise in a sense of rotation which is opposite to the sense of rotation (37) of the second gear (7).

4. A transfer case in accordance with claim 1, **characterized in that** the control cam (25) is rotationally fixedly connected to a fourth gear (27) which meshes with a starting gear (30) of an electric gear motor (31).

## Revendications

1. Boîte de transfert pour véhicule automobile, comprenant un carter (1), un arbre primaire (2) avec une liaison d'entraînement vers un premier essieu entraîné, un embrayage à friction commandé (4) et un entraînement dérivé pour l'entraînement d'un second essieu entraîné, ledit entraînement dérivé comprenant un premier engrenage 6) entraîné de façon commandée par l'embrayage à friction (4) et un troisième engrenage (8), lesquels sont reliés l'un à l'autre de manière active, dans laquelle l'embrayage à friction (4) est susceptible d'être actionné au moyen de deux bagues à rampe (15, 16) susceptibles d'être tournées l'une par rapport à l'autre, et chaque bague à rampe (15, 16) possède un levier de type ciseaux (19, 20) qui circule par son extrémité extérieure sur une came de commande, **caractérisée en ce que** la boîte de transfert comprend un second engrenage (7) entre le premier engrenage (6) et le troisième engrenage (8), et **en ce que** les cames de commande sont réalisées sur un noyau de commande (25) qui possède deux glissières de commande (35, 36) décalés l'un par rapport à l'autre et est capable de tourner autour d'un axe parallèle à l'axe de l'arbre primaire (2), et dans laquelle le noyau de commande (25) est monté en rotation sur le second engrenage (7) ou sur son arbre (9).

2. Boîte de transfert selon la revendication 1, **caractérisée en ce que** les glissières de commande (35, 36) sont disposés dans un plan.

3. Boîte de transfert selon la revendication 1, **caractérisée en ce que** les glissières de commande (35, 36) montent dans un sens de rotation qui est opposé au sens de rotation (37) du second engrenage (7).

4. Boîte de transfert selon la revendication 1, **caractérisée en ce que** le noyau de commande (25) est relié solidairement en rotation ou d'un seul tenant à un quatrièmes engrenage (27) qui engrène avec un engrenage de sortie (30) d'un motoréducteur électrique (31).
